# EUROPEAN PATENT SPECIFICATION

(11) **EP 1 563 574 B1**
(45) Date of publication and mention of the grant of the patent: **24.01.2007**
(21) Application number: 03811633.1
(22) Date of filing: 19.11.2003
(51) Int. Cl.: H01R 12/16, G06K 7/00

(54) **improved memory card connector**
verbesserter speicherkartenverbinder
connecteur de carte mémoire amélioré

(30) Priority: 19.11.2002 JP 2002334972
(43) Date of publication of application: 17.08.2005
(73) Proprietor: MOLEX INCORPORATED, Lisle, Illinois 60532 (US)
(72) Inventor: TOSHIHISA, Hirata, Yamato-shi, Kanagawa 242-0018 (JP)
(74) Representative: Herden, Andreas F.
(86) International application number: PCT/US2003/036952
(87) International publication number: WO 2004/047228

(56) References cited:
- EP-A- 1 072 998
- WO-A-98/13905
- US-A- 5 320 552

## Description

### Field of the Invention:

This invention generally relates to the art of electrical connectors and, particularly, to a memory card connector. The invention is specifically directed to a memory card connector which includes a cover and an improved means for pivotally and slidably mounting the cover to the connector housing.

### Background of the Invention:

Memory cards are known in the art and contain intelligence in the form of a memory circuit or other electronic program. Some form of card reader reads the information or memory stored on the card. Such cards are used in many applications in today's electronic society, including video cameras, digital still cameras, smartphones, music players, ATMs, cable television decoders, toys, games, PC adapters, multi-media cards and other electronic applications. Typically, a memory card includes a contact or terminal array for connection through a card connector to a card reader system and then to external equipment. The connector readily accommodates insertion and removal of the card to provide quick access to the information and program on the card. The card connector includes terminals for yieldingly engaging the contact array of the memory card.

For instance, a portable telephone is provided with a memory card capable of storing such information as a telephone number, melody information of incoming sound or the like along with subscriber identification information. The memory card can be inserted into and withdrawn from a memory card connector attached to a main body of the portable telephone. When the memory card is inserted into the card connector, the information stored on the card can be used. Therefore, even in the case of interchanging a portable telephone with a new telephone, it is not necessary for a user to write or rewrite new information on a memory card.

A typical memory card connector is provided with a dielectric housing in the form of a base on which the contacts or terminals are mounted. A cover is attached to the base and is movable between an open position and a closed position relative to the base. A memory card is inserted into the cover when the cover is in its open position, and the cover and memory card then can be moved relative to the base to bring the contacts on the card into engagement with the terminals on the base. An example of such a card connector is shown in Japanese Patent Laid-Open No. 2000-48879. The card connector in that publication is designed so that the cover is not intended to be detached from the base. Therefore, if the cover is accidentally detached, all kinds of problems can be encountered to remount that cover or a new cover to the base. In addition, there are no means for confirming whether or not the memory card has been brought into a fully locked condition properly mounted on the base. The cover may be unintentionally opened due to incomplete locking. The present invention is directed to solving these various problems.
United States Patent 5,320,552 discloses a contractor device, especially for a SIM which has a contact holder having a pull-out stop or a cover to hold the SIM in its reading position in order to hold the SIM in the contact holder and especially in the recess therein.

### Summary of the Invention:

An object, therefore of the invention is to provide a memory card connector as defined in claim 1.

In the exemplary embodiment of the invention, a memory card connector is designed for receiving a memory card having a plurality of conductive contacts. The connector includes an insulating housing mounting a plurality of conductive terminals. A cover is provided with receptacle means for receiving the memory card. A pivot-detent mechanism is operatively associated between the cover and the housing and movably mounts the cover to the housing. The pivot-detent mechanism includes pivot means engageable between the cover and the housing to mount the cover for pivotal movement between an open position to allow the memory card to be received on the cover and a closed position bringing the contacts of the memory card into engagement with the terminals on the housing. The pivot-detent mechanism also include detent means engageable between the cover and the housing to allow the cover to slidably move from the closed position to a latched position. A portion of the pivot means provides a dual function of forming a portion of the detent means.

The pivot means of the pivot-detent mechanism comprises a pivot socket in one of the cover and housing for receiving a pivot projection on the other of the cover and housing. The detent means of the pivot-detent mechanism includes a detent socket separate from and independent of the pivot socket for receiving the pivot projection and defining the latched position of the cover. The pivot projection thereby performs a dual function of forming a portion of both the pivot means and the detent means.

The housing is generally flat and mounts the terminals in a generally side-by-side array. The housing includes a pair of mounting portions at opposite sides thereof. The cover is stamped and formed of conductive sheet metal material and, like the housing, is generally flat, with the receptacle means on the cover including a mouth at one end thereof for insertion of the memory card thereinto. The cover has a pair of spring arms at an opposite end thereof and juxtaposed alongside the pair of mounting portions of the housing. The pivot-detent mechanism is operatively associated between the mounting portions of the housing and the spring arms of the cover. Specifically, a pivot socket and a detent socket, as described above, are formed in each of the mounting portions of the housing. A pivot projection is stamped and formed out of each spring arm of the cover. With the cover stamped and formed of sheet metal material, the spring arms are resilient to self-bias the pivot projections thereon into the pivot sockets and the detent sockets in the mounting portions of the housing.

In one embodiment, the detent projection may be cone-shaped. In another embodiment, the detent projection may be flat, round and chamfered about the periphery thereof. According to another aspect of the invention, complementary interengaging latch means is provided between the cover and the housing and is automatically engageable when the cover slides to its latched position. As disclosed herein, the latch means is provided by a latching flange on the cover slidable under a latching flange on the housing when the Other objects, features and advantages of the invention will be apparent from the following detailed ,description taken in connection with the accompanying drawings.

### Brief-Description of the Drawings:

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:
FIGURE 1 is fragmented perspective view of a portion of a portable telephone base having a memory card connector according to a first embodiment of the invention mounted in the telephone base;
FIGURE 2 is a perspective view of the card connector of the first embodiment, with the cover of the connector and the memory card in the closed and latched position;
FIGURE 3 is a top plan view of the assembly of Figure 2;
FIGURE 4 is a fragmented vertical section taken generally along line IV-IV of Figure 1;
FIGURE 5 is a perspective view of the cover of the connector removed from the housing;
FIGURE 6 is an end elevational view of the cover looking in the direction of arrow XI in Figure 5;
FIGURE 7 is an end elevational view similar to that of Figure 6, but of a modified version;
FIGURE 8 is a bottom plan view of the cover;
FIGURE 9 is a vertical section (with the memory card in elevation, taken generally along line IX-IX in Figure 2;
FIGURE 10 is a perspective view of the housing of the first embodiment of the connector;
FIGURE 11 is a perspective view of the housing as shown in Figure 10, on a reduced scale, and with the cover in disassembled condition above the housing;
FIGURE 12 is a view similar to that of Figure 11, with the cover just about to be assembled to the housing;
FIGURE 13 is a view similar to that of Figure 12, with the cover moved to its pivoted position mounted on the housing;
FIGURE 14 is a view similar to that of Figure 4, with the cover pivoted to an open, card loading position;
FIGURE 15 is a view similar to that of Figure 14, with the cover being pivoted toward its closed position;
FIGURE 16 is a vertical section with the cover in somewhat the same position as Figure 15;
FIGURE 17 is a perspective view similar to that of Figure 2, but with the cover pivoted to its closed position;
FIGURE 18 is a top plan view of the connector in the condition of Figure 17;
FIGURE 19 is a section through the telephone base, with a side elevational view of the connector in the condition of Figures 17 and 18;
FIGURE 20 is a vertical section similar to that of Figure 16, but with the connector in the condition of Figures 17-19;
FIGURE 21 is a perspective view similar to that of Figures 2 and 17, but with the cover shown in an intermediate state of moving from its closed position (Fig. 17) to its latched position (Fig. 2);
FIGURE 22 is a top plan view of the connector, with the cover in the condition of Figure 21;
FIGURE 23 is a perspective view of a second embodiment of a card connector according to the invention;
FIGURE 24 is a perspective view of the housing of the second embodiment;
FIGURE 25 is a perspective view of the connector of the second embodiment, with the cover in the closed position;
FIGURE 26 is a side elevational view looking in the direction of arrow "X" in Figure 25;
FIGURE 27 is a side elevational view similar to that of Figure 26 wherein the cover has been slidably moved to an unlatched pivotable state;
FIGURE 28 is a side elevational view wherein the cover has been pivoted upwardly from the position of Figure 27 to allow the memory card to be inserted or withdrawn from the cover;
FIGURE 29 is a perspective view of a card connector according to a third embodiment, with the cover in a closed position;
FIGURE 30 is a perspective view of the third embodiment of the connector, with the cover in an open position;
FIGURE 31 is a top plan view of the cover as viewed in the direction of arrow "Y" in Figure 30;
FIGURE 32 is a perspective view of the housing of the third embodiment of the card connector;
FIGURE 33 is an enlarged perspective view of the area within the circle "Z" in Figure 32;
FIGURE 34 is a view similar to that of Figure 30, but of a modified version of the third embodiment of the invention;
FIGURE 35 is a vertical section through the modified version of Figure 34;
FIGURE 36 is a view similar to that of Figure 35, with the cover pivoted to its closed position;
FIGURE 37 is a perspective view of a second modified version of the third embodiment of the card connector;
FIGURE 38 is a view similar to that of Figure 33 but of the version shown in Figure 37;
FIGURE 39 is a vertical section taken generally along line "W-W" in Figure 37;
FIGURE 40 is a view similar to that of Figure 39, but with the cover pivoted to its closed position; and
FIGURE 41 is an enlarged perspective view of the area encircled at "V" in Figure 24.

### Detailed Description of the Preferred Embodiments:

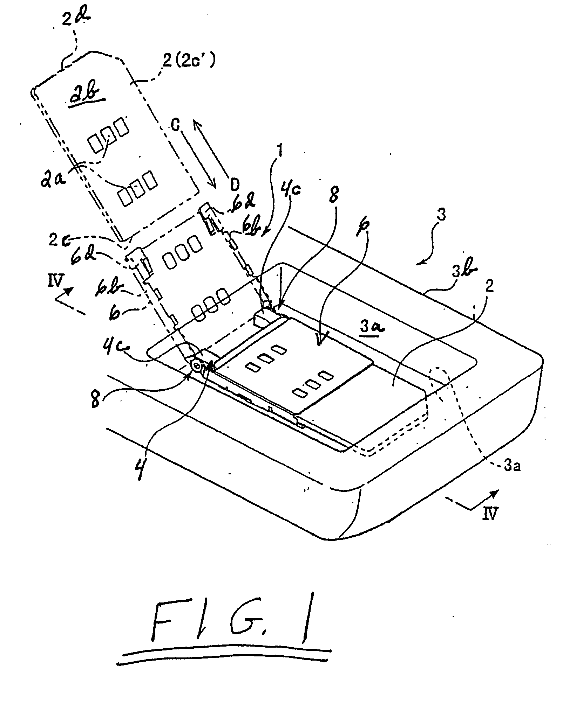

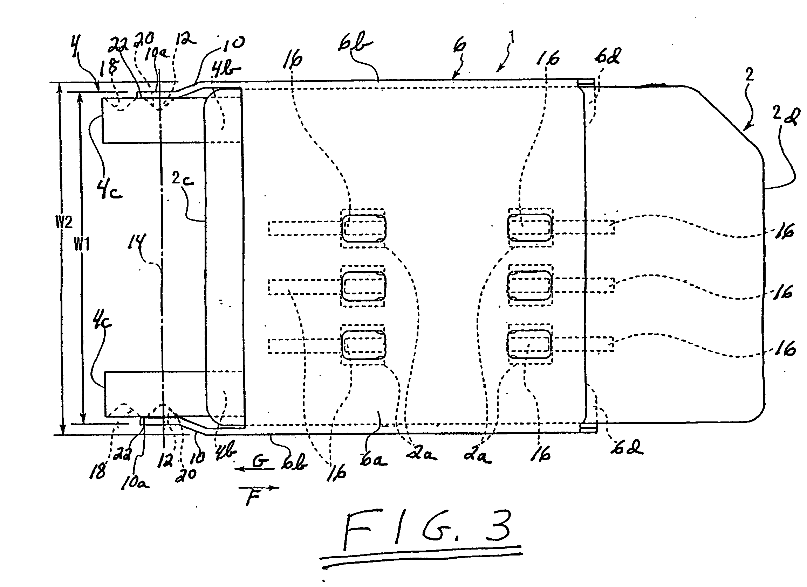

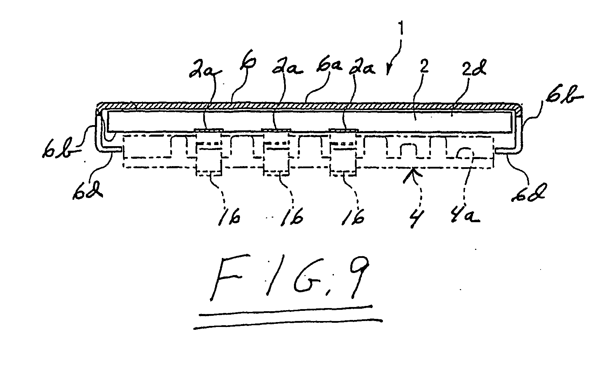

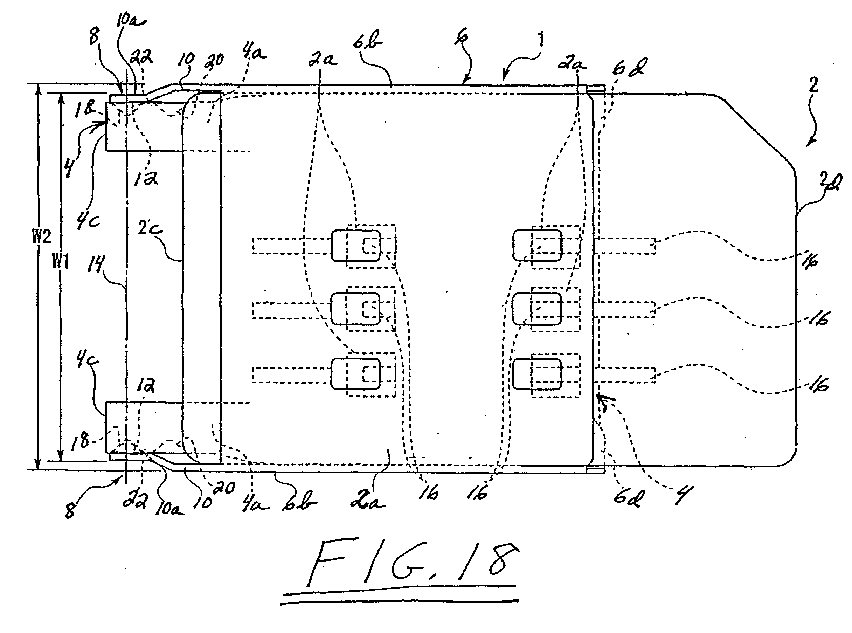

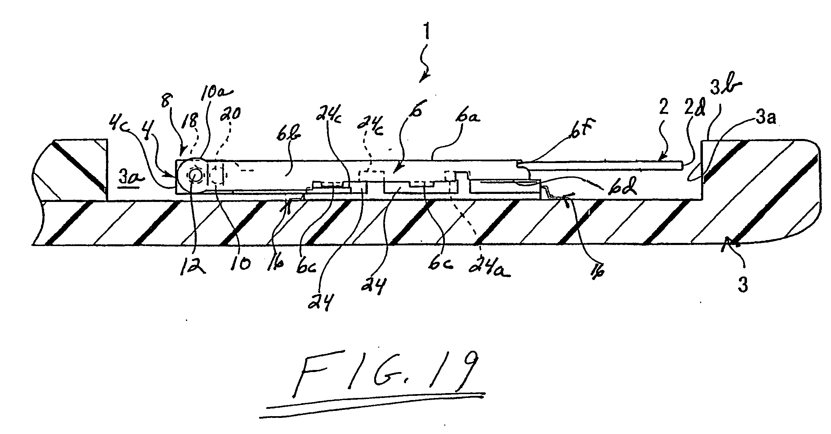

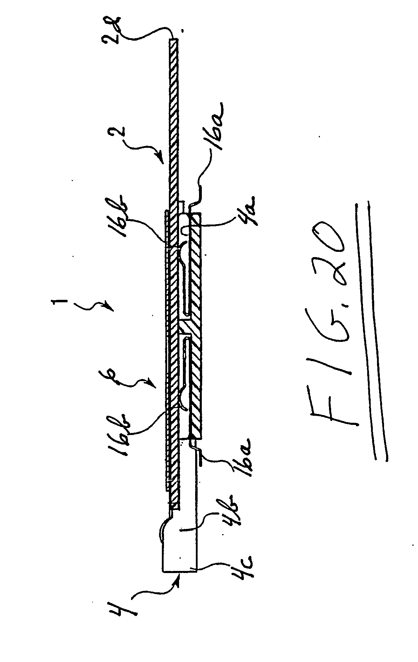

Referring to the drawings in greater detail, a first embodiment of the invention is shown in Figures 1-22. Referring first to Figure 1, a memory card connector, generally designated 1, receives a memory card 2 having a plurality of conductive contacts 2a. Card connector 1 is shown mounted in a recess 3a of a base 3b of a portable telephone, generally designated 3. However, it should be understood that the various embodiments and versions of the card connectors shown herein are applicable for a wide range of uses other than portable telephones, as pointed out in the "Background" herein.

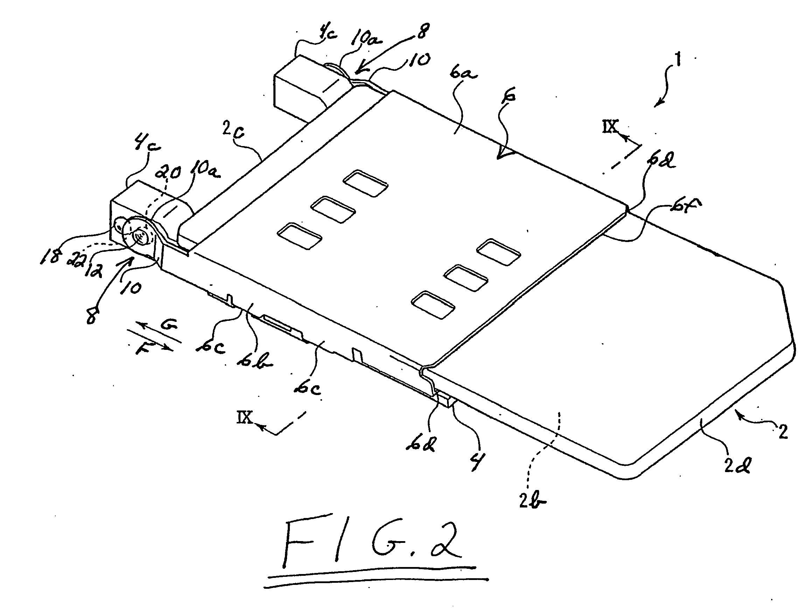

With that understanding, card connector 1 includes two basic components, namely a housing, generally designated 4, and a cover, generally designated 6. The housing may be fabricated of dielectric material such as plastic or the like. The cover may be stamped and formed of sheet metal material. The cover is pivotally and slidably mounted to the housing by a pivot-detent mechanism, generally designated 8. Memory card 2 is insertable into the cover in the direction of arrow "C" (Fig. 1) and is removable from the cover in the direction of arrow "D". Figures 2-4 show memory card 2 received by cover 6, with the cover in its closed and latched position relative to housing 4. The cover is slidable to a latched position in the direction of arrow "F" (Fig. 2) and from its latched position in the direction of arrow "G".

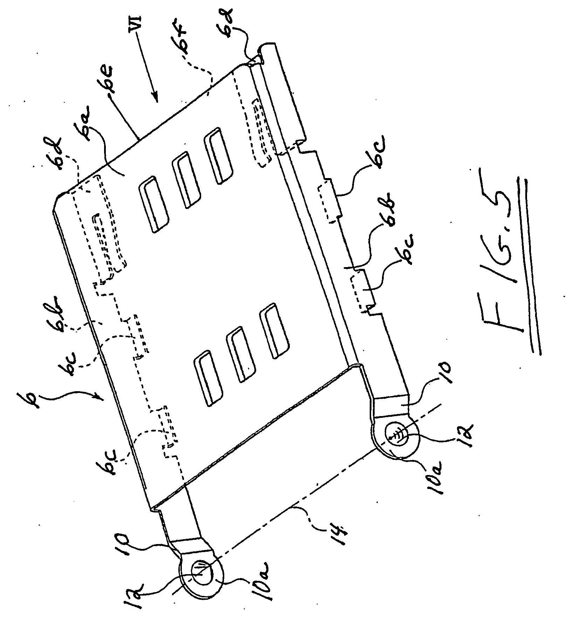

Before proceeding with the operation of connector 1, reference is made to Figures 5-9 wherein cover 6 is shown isolated from the housing. As stated above, the cover may be stamped and formed of sheet metal material. As shown, the cover is generally flat and includes a cover plate 6a and a pair of side walls 6b depending from opposite sides of the cover plate. Two latching flanges 6c are bent inwardly from the bottom edges of side walls 6b. A pair of card guide flanges 6d are bent inwardly from side walls 6b at a card loading end 6e of the cover. Therefore, cover plate 6a, side walls 6b, and card guide flanges 6d define a receptacle 6f (Fig. 5) for receiving memory card 2 in the direction of arrow VI in Figure 5.

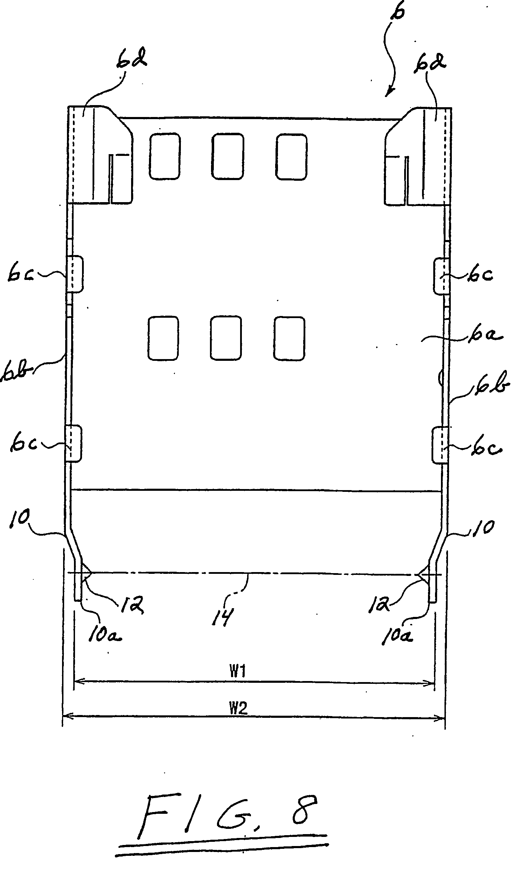

Still referring to Figures 5-9, as part of the pivot-detent mechanism 8, a pair of spring arms 10 extend from opposite sides of cover plate 6a of cover 6, the spring arms forming extensions of side walls 6b of the cover as clearly seen in Figures 5 and 8. A conically shaped detent projection 12 is formed from a distal end 10a of each spring arm, with the conically shaped detent projections pointing inwardly toward each other on an imaginary pivot line 14 (Figs. 5 and 8). As will be seen hereinafter, pivot projections 12 perform a dual function of providing a pivoting means for cover 16 as well as part of the detent means for defining the sliding latched position of the cover. Figure 8 shows that the width "W2" of cover 6, including side walls 6b, is wider than the width "W1" between the distal ends 10a of spring arms 10. This is due to the fact that the distal ends of the spring arms are bent inwardly as shown in Figure 8.

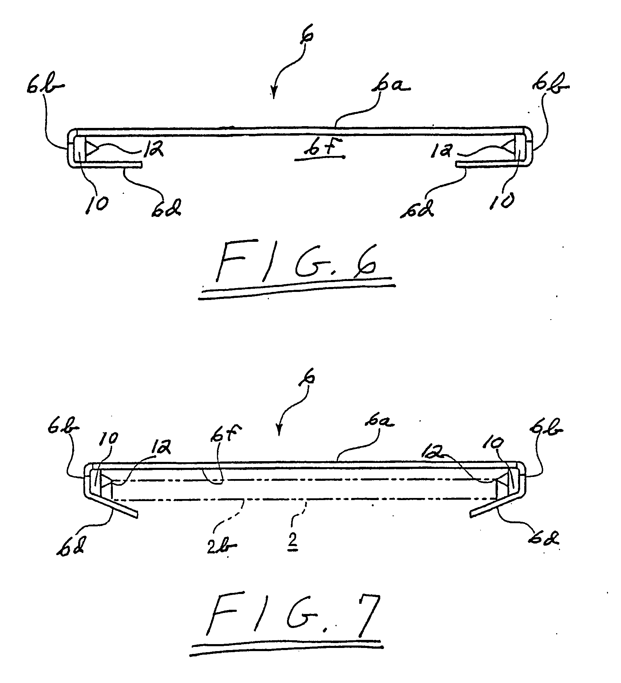

Figure 7 shows a modified version wherein card guide flanges 6d are bent at angles so that the flanges do not engage contact face 2b of memory card 2. In essence, guide flanges 6d engage only corner edges of the card as seen in Figure 7.

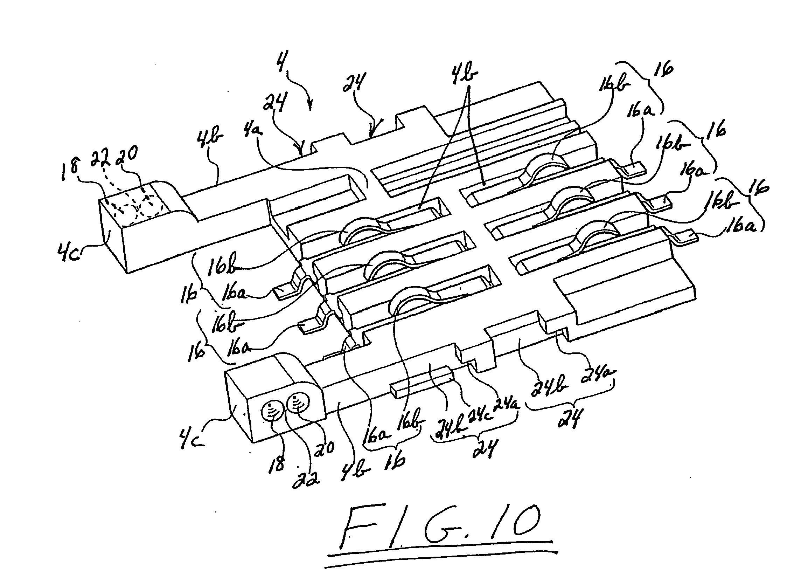

Figure 10 shows the details of housing 4. As can be seen, the housing is generally flat and includes a main body 4a which has a plurality of recess 4b which mount a plurality of conductive terminals 16 in two rows of side-by-side arrays. Each terminal includes a tail portion 16a for connection, as by soldering, to an appropriate circuit trace on a printed circuit board (not shown) within recess 3a (Fig. 1) of base 3 of the portable telephone. The terminals are generally U-shaped and form flexible contact portions 16b which project upwardly from the top face of main body 4a of the housing for engaging contacts 2a of the memory card.

Still referring to Figure 10, housing 4 has a pair of cover attaching arms 4b which have enlarged distal ends 4c. A conically shaped pivot socket 18 and a conically shaped detent socket 20 are formed in the outside surface of each enlarged distal end 4c of each cover attaching arm 4b. The sockets are separated by lands 22.

Figure 10 shows that housing 4 has latching means 24 at opposite sides of main body 4a. Specifically, the latching means include a pair of latching flanges 24a which, as will be seen hereinafter, engage latching flanges 6c of cover 6 in the latched position of the cover. Open areas 24b behind latching flanges 24a allow the cover to be lifted away from the housing to its open, loading position as will be seen hereinafter. A stop flange 24c defines the closed position of the cover.

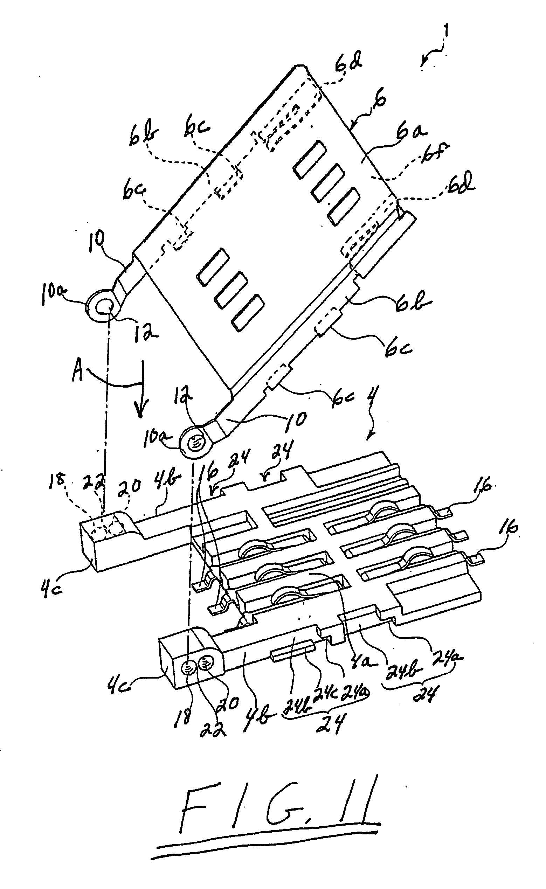

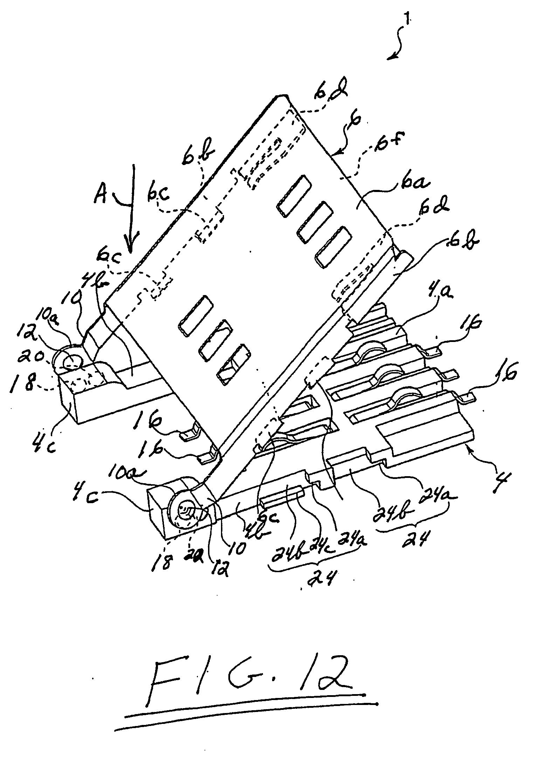

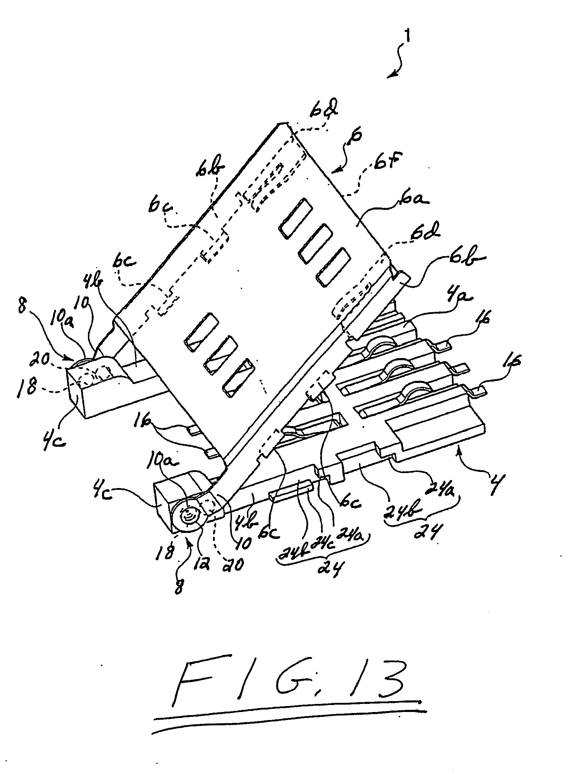

The assembly of cover 6 on housing 4 now will be described in relation to Figures 11-13. Cover 6 is assembled to the housing in the direction of arrow "A" in Figure 11. The cover is moved until pivot projections 12 engage the tops of distal ends 4c of cover attaching arms 4b of the housing as seen in Figure 12. With the pivot projections being conically shaped, as the cover is moved further in the direction of arrow "A", the conically shaped projections will spread spring arms 10 outwardly until the pivot projections snap into pivot sockets 18 as seen in Figure 13. The cover now is free to pivot relative to the cover about a pivot axis (14 in Figs. 5 and 8) extending between pivot projections 12 of the cover and pivot sockets 18 of the housing.

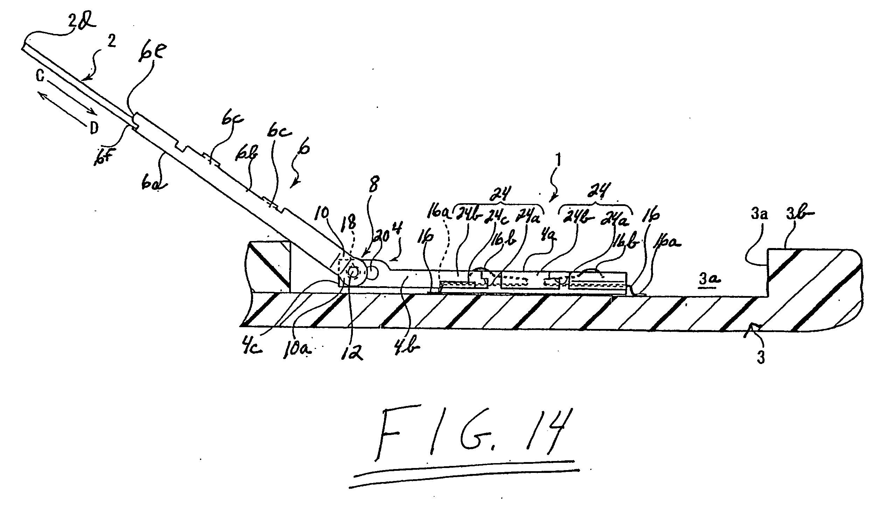

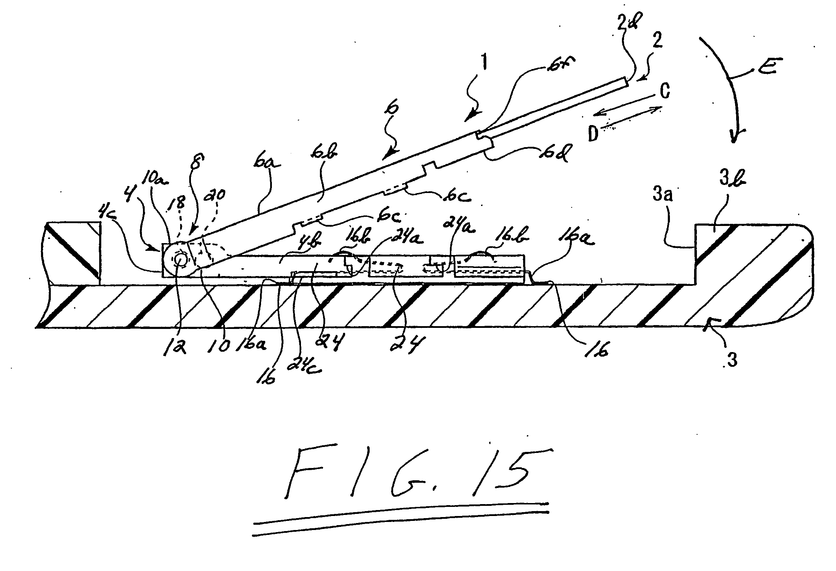

Figure 14 shows that cover 6 has been pivoted back to a position where it can rest on a corner 26 of base 3 of the portable telephone. In this position, memory card 2 can easily be inserted into cover 6 in the direction of arrow "C" and withdrawn from the cover in the direction of arrow "D". Of course, as seen in Figure 15, the memory card can be inserted into and removed from cover 6 at any position that the cover might be pivoted above housing 4. At this point, referring back to Figure 1 in conjunction with Figures 14 and 15, memory card 2 has a leading edge 2c and a trailing edge 2d in relation to the direction of inserting the card into cover 6. When inserting the card, contacts 2a (Fig. 1) of the card should face aware from cover plate 6a (Figs. 5 and 8) so that the contacts on the cover can engage flexible contact portions 16b of terminals 16 mounted on the housing.

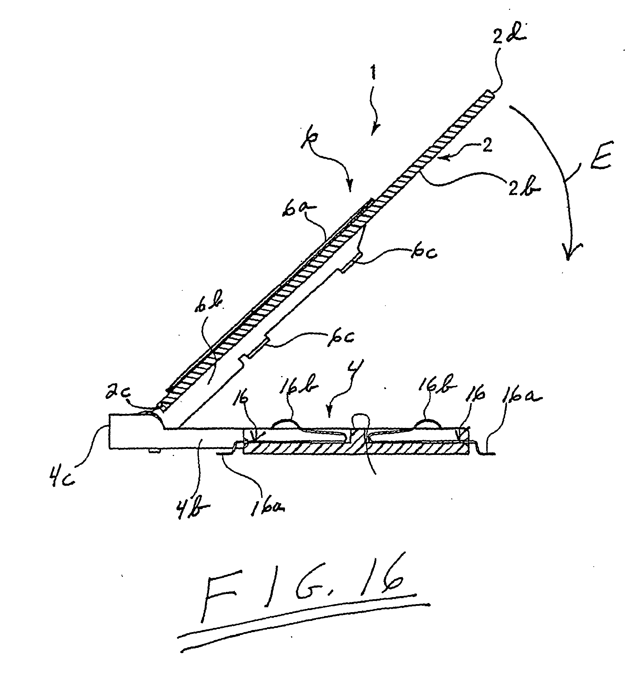

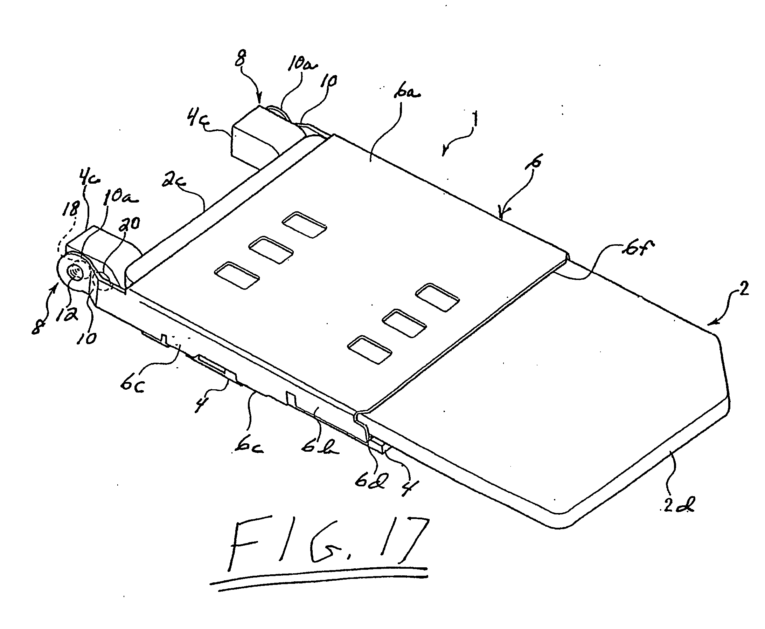

Once memory card 2 is inserted into cover 6, the cover and card are pivoted downwardly in the direction of arrow "E" (Figs. 15 and 16) until the memory card reaches its closed position as seen in Figures 17-20. In this closed position as shown, pivot projections 12 of cover 6 still are pivotally engaged within pivot sockets 18 on housing 4. During closing, latching flanges 6c (Figs. 5 and 8) of the cover pass through open areas 24b (Fig. 10) at the outsides of housing 4 until the rearwardly located latching flanges 6c rest on top of stop flanges 24c (Fig. 10) to define the fully closed position of the cover.

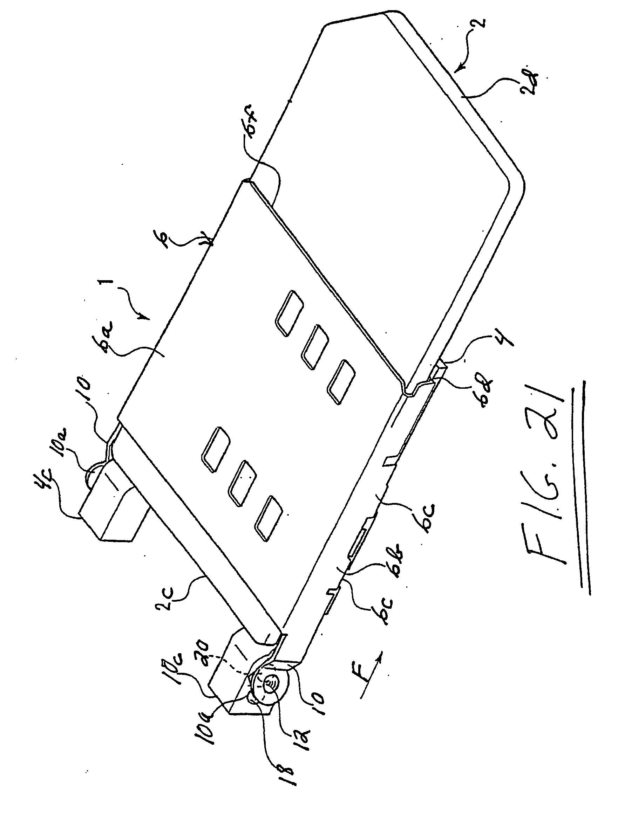

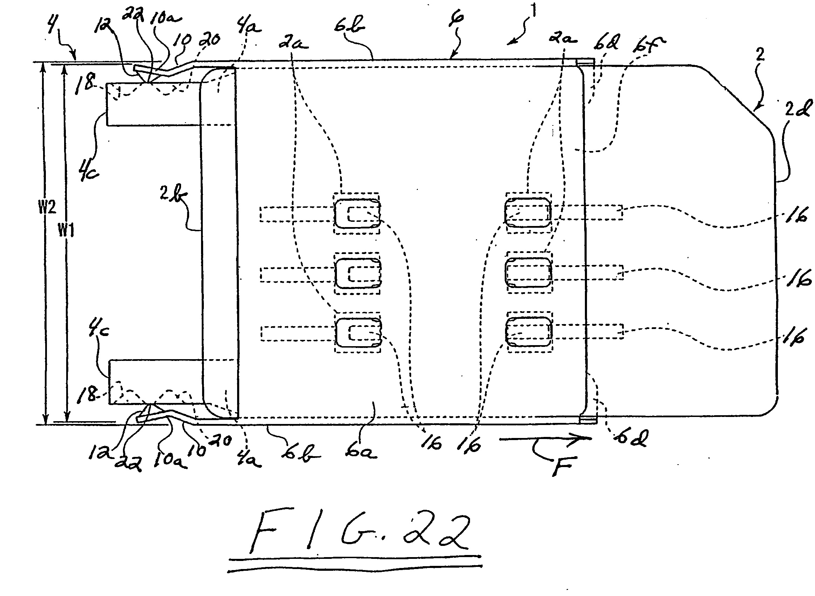

After the cover is pivoted relative to the housing to its closed position, the cover then can be slidably moved relative to the housing to a latched position. This movement is shown in Figures 21 and 22 where it can be seen that pivot projections 12 on the cover have moved out of pivot sockets 18 and onto lands 22 between the pivot sockets and detent sockets 20, as the cover slides in the direction of arrows "F". This position shown in Figures 21 and 22 might be considered an intermediate position, because the cover has not yet been slidably moved to its fully latched position.

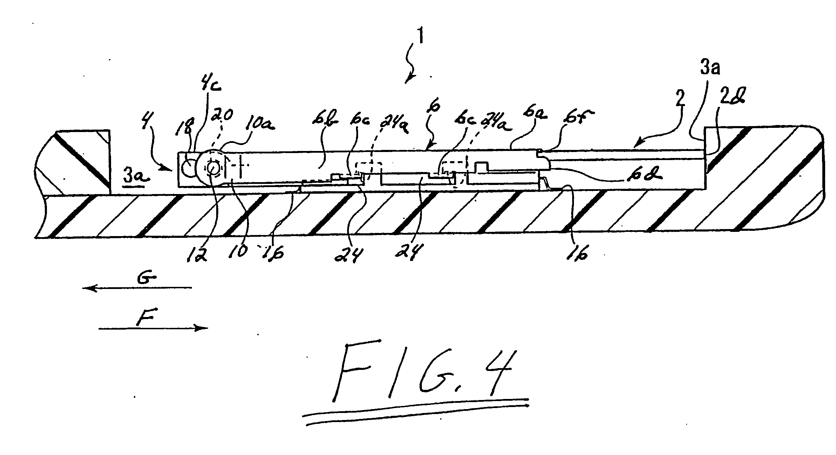

Further movement of the cover 6 in the direction of arrow "F" (Fig. 21) causes the cover to move to its fully closed and latched position as shown in Figures 2-4. In the latched position, pivot projections 12 of the cover snap into detent recesses 20 of the housing under the biasing of spring arms 10 of the cover and give an audible and tactile "clicking" sound and feel. In addition, inwardly turned latching flanges 6c of the cover slide under latching flanges 24a at the outsides of the housing as shown in Figure 4. The cover now is held against sliding movement by the interengagement of the pivot projections in the detent recesses, and the cover is prevented from pivoting upwardly by the interengagement of the latching flanges on the cover and the latching flanges on the housing.

In order to move the cover back to its open (card loading) position, the cover is slidably moved in the direction of arrow "G" (Fig. 4) so that pivot projections 12 on the cover move back out of detent recesses 20 in the housing and snap back into pivot recesses 18, whereupon the cover and the memory card can be pivoted upwardly to the open/card loading position described above.

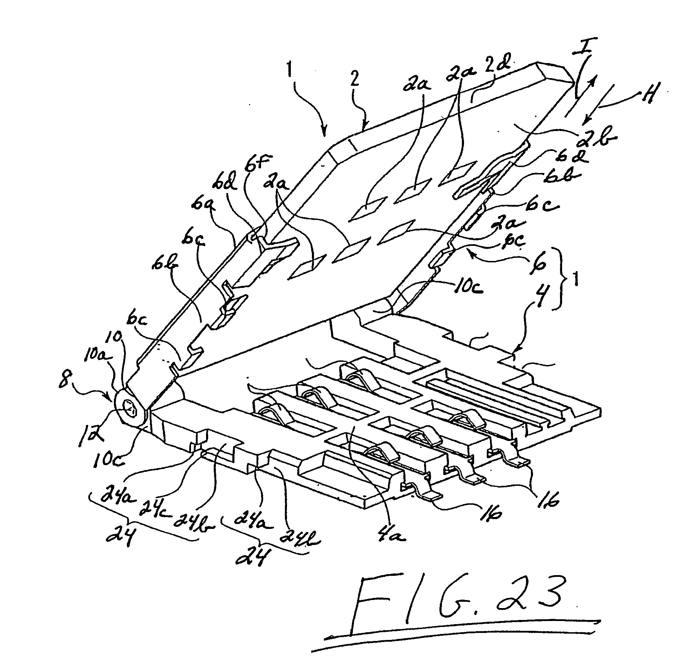

Figures 23-28 and 41 show a second embodiment of the invention. Basically, the differences between the first and second embodiments reside in the locations of the pivot recesses and the latching flanges on the housing. Therefore, like reference numerals have been applied in Figures 23-28 and 41 corresponding to like components described above in relation to the first embodiment of Figures 1-22.

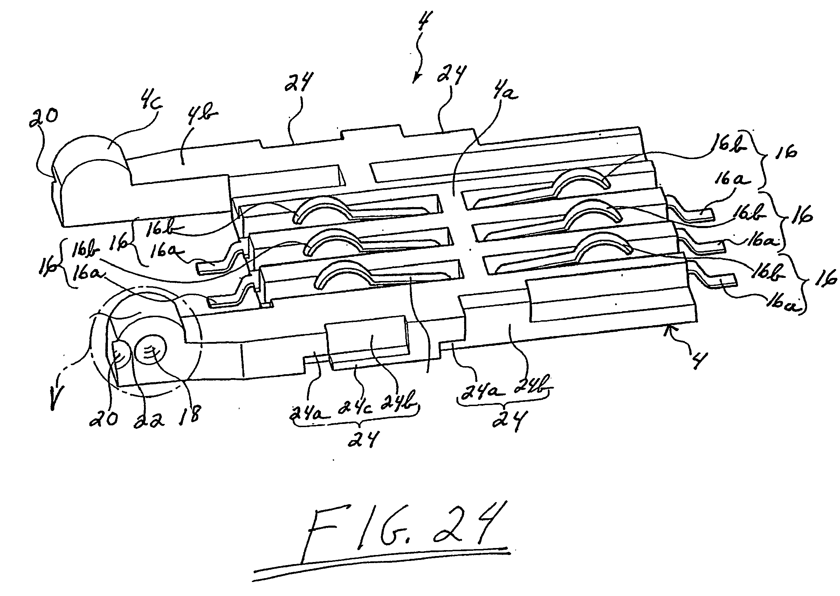

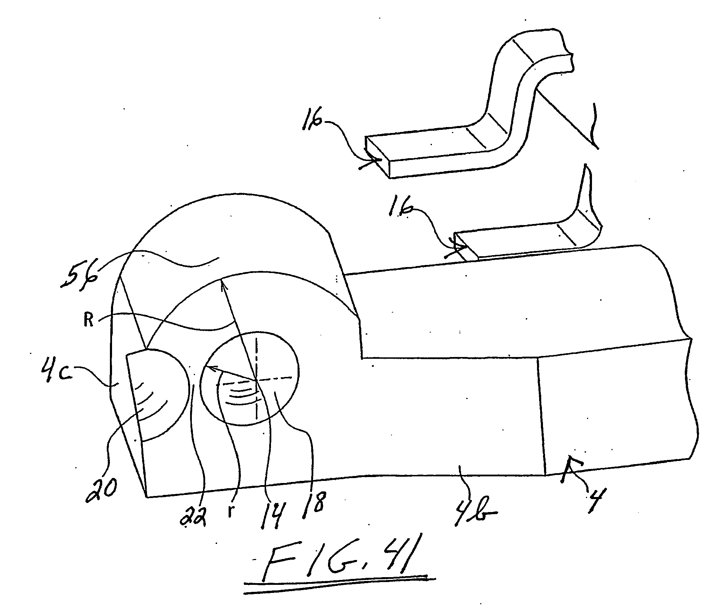

More specifically, and referring first to Figure 10, it can be noted that pivot recesses 18 at the outsides of housing 4 are located rearwardly of detent recesses 20. It also should be noted in Figure 10 that latching flanges 24a sort of "open" in a rearward direction. Now, referring to the second embodiment and particularly Figures 24 and 41, it can be seen that pivot recesses 18 are located forwardly of detent recesses 20. Detent recesses 20 are semi-conical. This reduces the length of the housing and, thereby, saves plastic material and its costs. In addition, latching flanges 24a "open" in a forward direction.

With those understandings, the pivoting movement of cover 6 in the second embodiment is substantially the same as the first embodiment. However, the sliding movement of the cover to its latched position is reversed from that of the first embodiment. In other words, the cover in the second embodiment slides rearwardly to its fully closed and latched position.

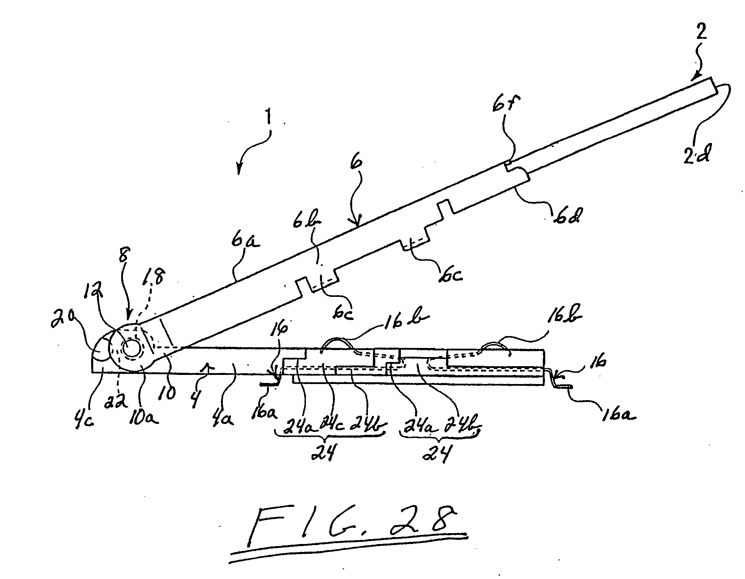

This can be seen with reference to the drawings of the second embodiment. Specifically, Figures 23 and 28 show cover 6 pivoted to its open position and memory card 2 inserted into the cover in the direction of arrow "H". The cover can be removed in the direction of arrow "I". In this position, pivot projections 12 on the cover are in the forward pivot recesses 18 of the housing.

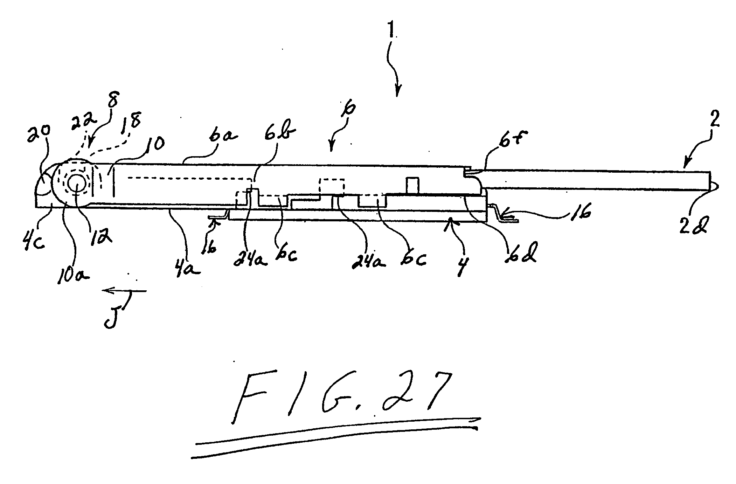

Figure 27 shows cover 6 and memory card 2 of the second embodiment pivoted to its closed but unlatched position. In other words, pivot projections 12 of the cover still are located in pivot recesses 18 of the housing. From this position, the cover can be slidably moved relative to the housing in the direction of arrow "J" (Fig. 27).

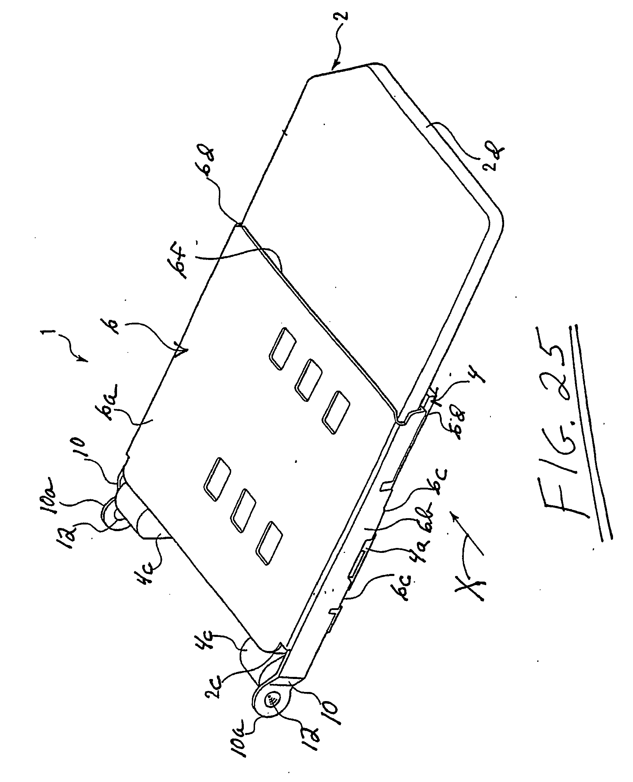

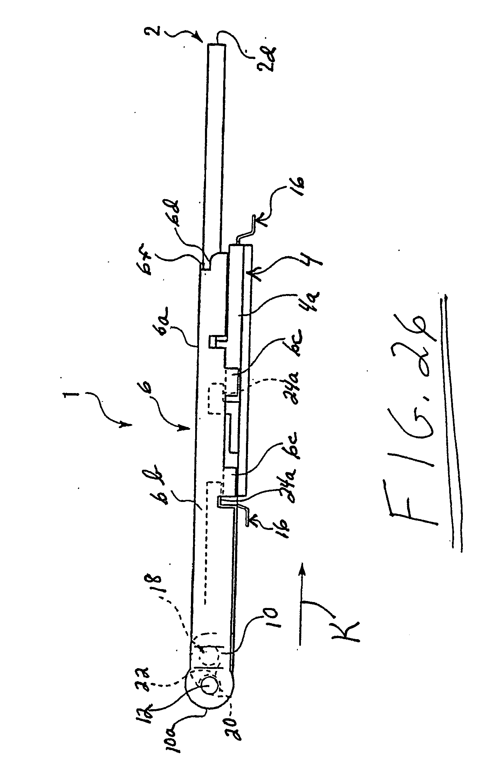

Figures 25 and 26 show cover 6 of the second embodiment slidably moved from the closed position of Figure 27 to its closed and latched position. In the latched position, pivot projections 12 move from pivot recesses 18 onto lands 22 and into detent recesses 20. In addition, latching flanges 6c of the cover move under latching flanges 24a of the housing. This prevents the cover from any further pivotal movement. As with the first embodiment, in order to re-open the cover, the cover is slidably moved back in the direction of arrow "K" shown in Figure 26, whereupon pivot projections 12 move back out of detent recesses 20 and into pivot recesses 18 while latching flanges 6c of the cover move out of engagement with latching flanges 24a of the housing.

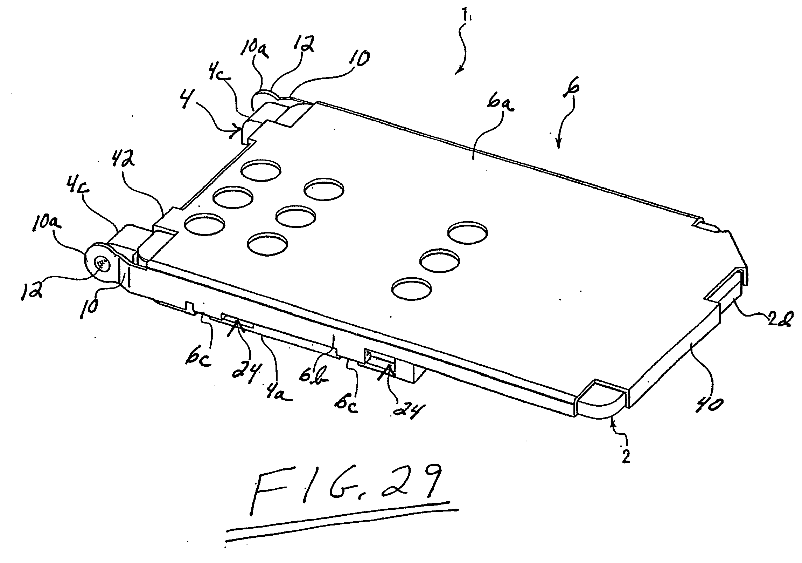

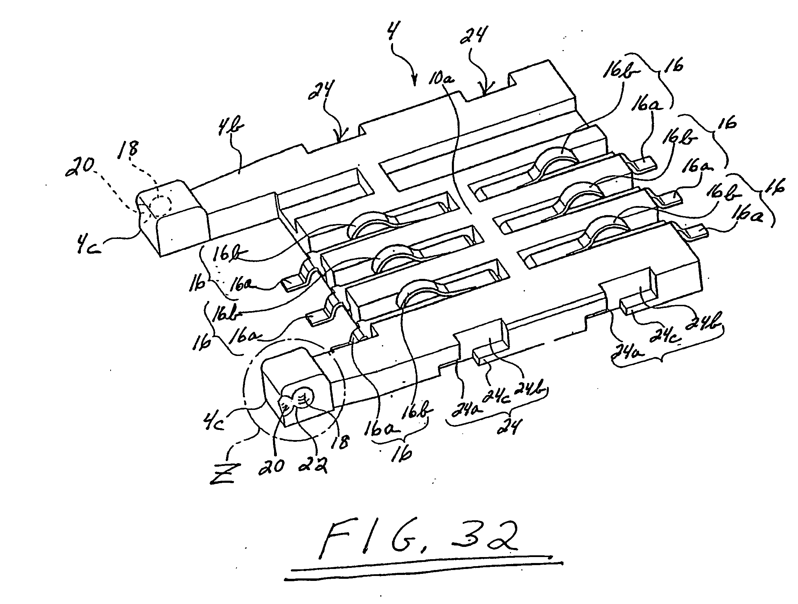

Figures 29-33 show a third embodiment of the invention. The third embodiment differs from the first two embodiments primarily in (1) the configuration of the pivot projections and the pivot and detent recesses, and (2) the shape of the cover. The pivoting operation of the third embodiment is the same as the first two embodiments and will not be repeated. In addition, the location of the pivot and detent recesses and the direction of sliding movement of the cover are the same as the second embodiment and will not be repeated. Further, like reference numerals again have been applied and are being used to describe the third embodiment corresponding to like components described above in relation to the first two embodiments.

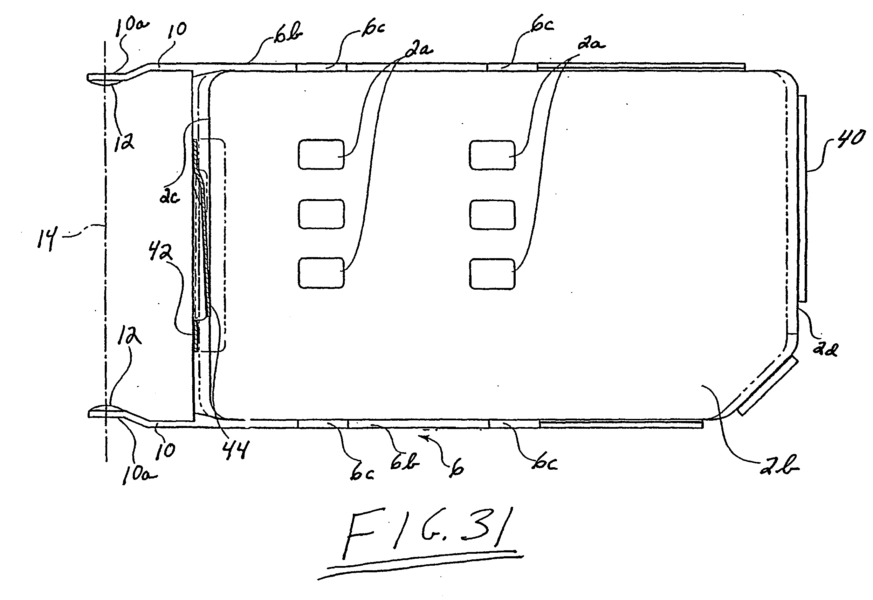

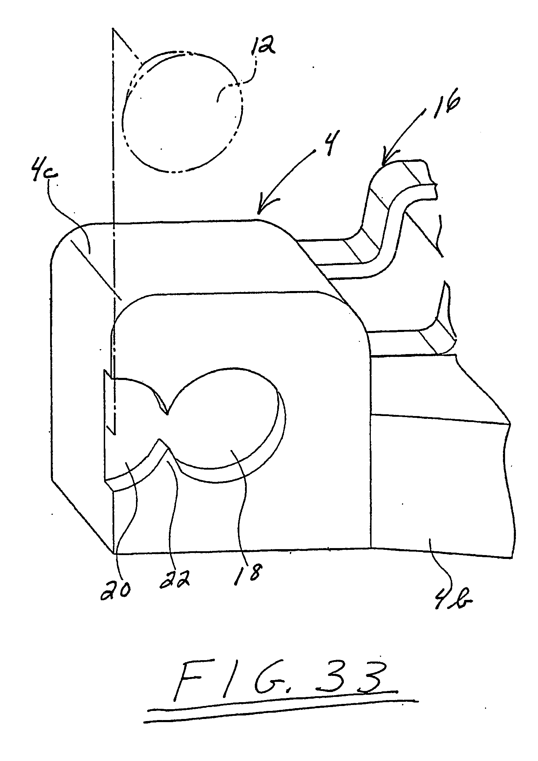

With those differences, it can be seen best in Figure 31 that pivot projections 12 are round and more flat than the conically shaped pivot projections of the first two embodiments. Correspondingly, as best seen in Figure 33, pivot recesses 18 and detent recesses 20 on housing 4 are round and flat or shallow in comparison to the conically shaped recesses of the first embodiment. These flat projections and recesses may allow for spring arms 10 to be more robust or stiffer because they do not have to be spread apart with the flat projections as if the projections were conically shaped. Again, a "clicking" sound or feel is created when the projections move in and out of the recesses.

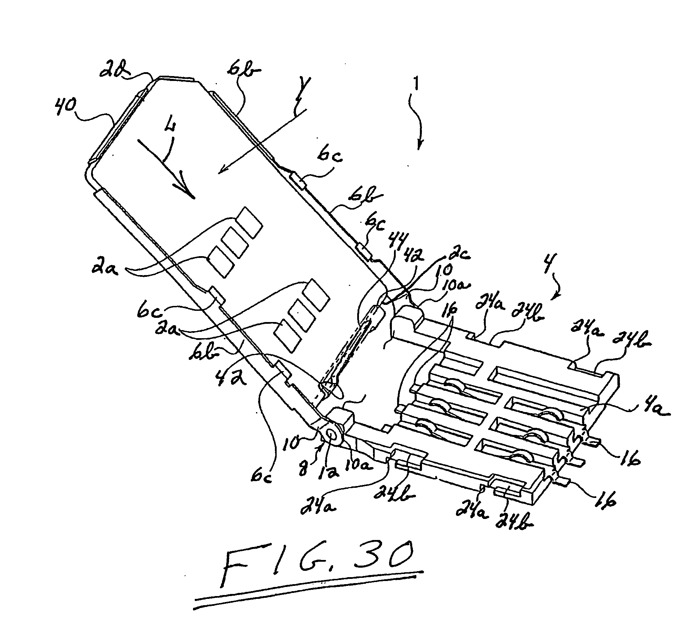

Another difference in the third embodiment can be seen best in Figures 29-31 wherein cover 6 is shown to be sufficiently large to substantially cover the entirety of memory card 2. The cover has an end flange 40 which extends over trailing edge 2d of the memory card. A card support flange 42 is formed at the opposite end of the cover. A leaf spring 44 is stamped and formed out of card support flange 42 for biasing the memory card securely against end flange 40. The card is inserted into the cover by inserting leading edge 2c of the card under latching flanges 6c of the cover in the direction of arrow "L" (Fig. 30) until the leading edge of the cover engages leaf spring 44. The cover is moved against the biasing of the leaf spring until trailing edge 2d of the cover passes end flange 44 whereupon the card snaps into the cover. The card ends up sandwiched between leaf spring 44 and end flange 40.

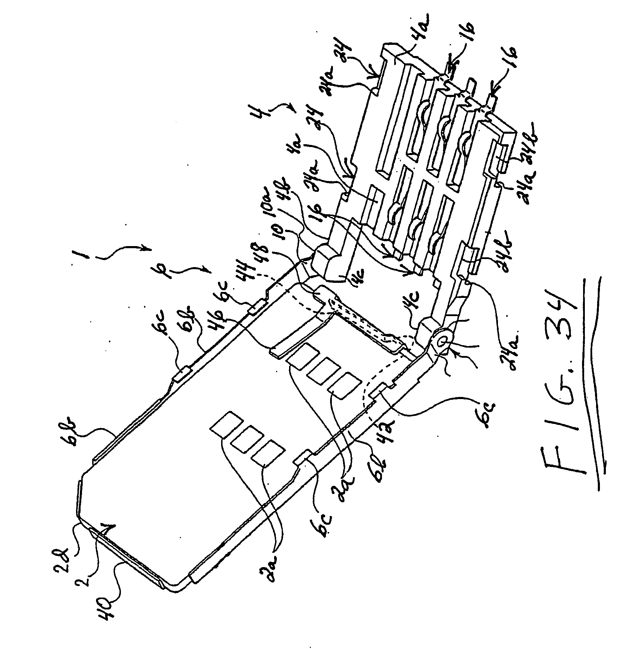

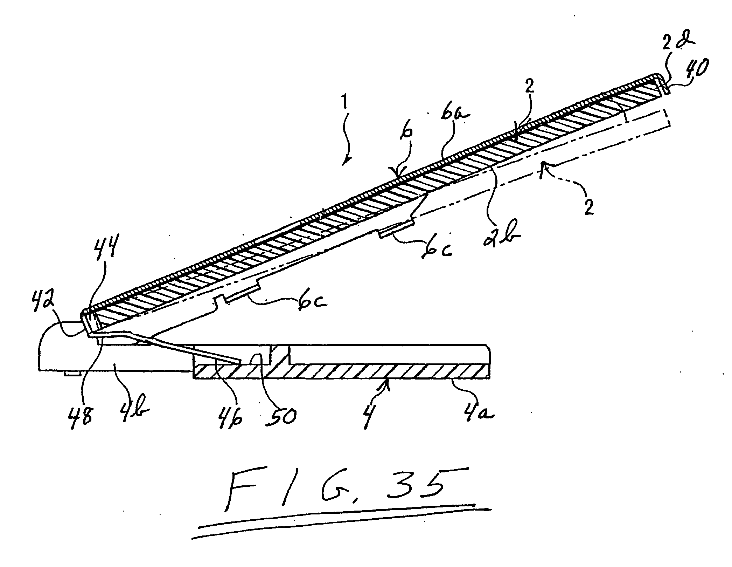

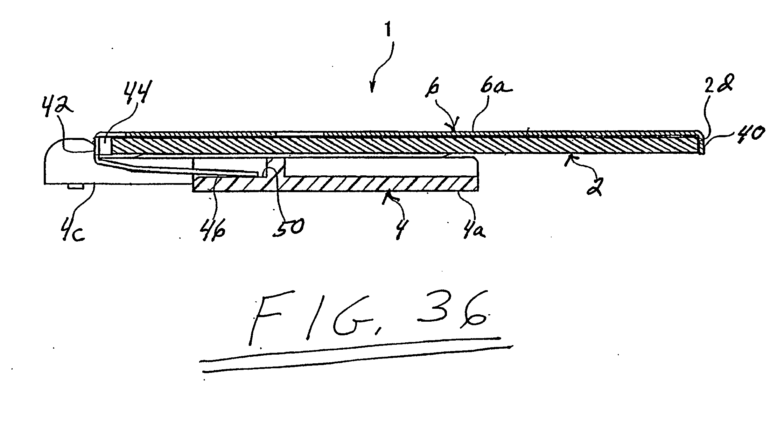

Figures 34-36 show a modified version of the third embodiment. In other words, like the third embodiment, the version of Figures 34-36 includes leaf spring 44 stamped and formed out of card support flange 42 whereby memory card 12 becomes sandwiched between the leaf spring and end flange 40. However, the modified version of Figures 34-36 includes a cantilevered spring arm 46 which is stamped and formed to extend away from a base 48 which extends from card support flange 42. As seen in Figure 35, cantilevered spring arm 46 engages a surface 50 of housing 4 to hold cover 6 and memory card 2 in an elevated or open position. Figure 36 shows the cover closed, whereupon cantilevered spring arm 46 is bent and becomes "cocked" whereat energy is stored in the cantilevered spring arm. When the cover is moved back from its closed and latched position to its initial closed position as described in the three embodiments, above, cantilevered spring arm 46 is effective to automatically move the cover and memory card back to the open position of Figure 35. Figure 35 also shows memory card 2 in phantom to illustrate how the memory card is initially loaded in the direction of arrow "L" into the underside of cover 6.

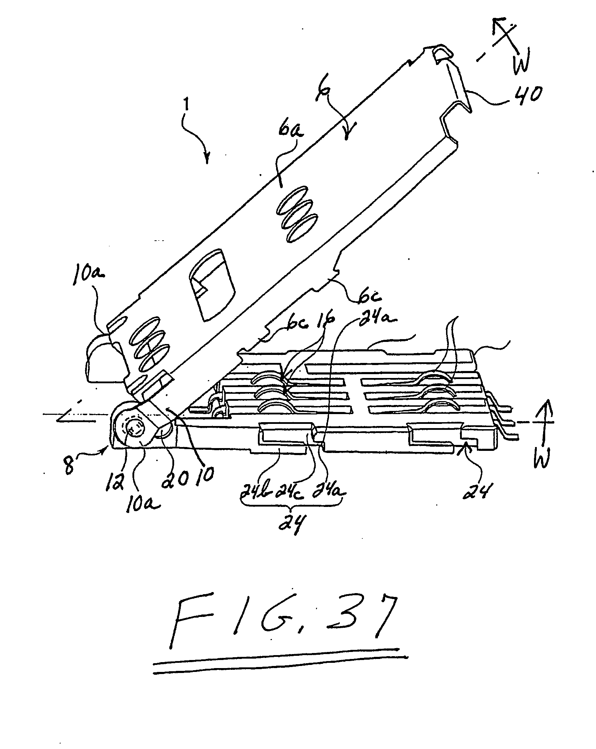

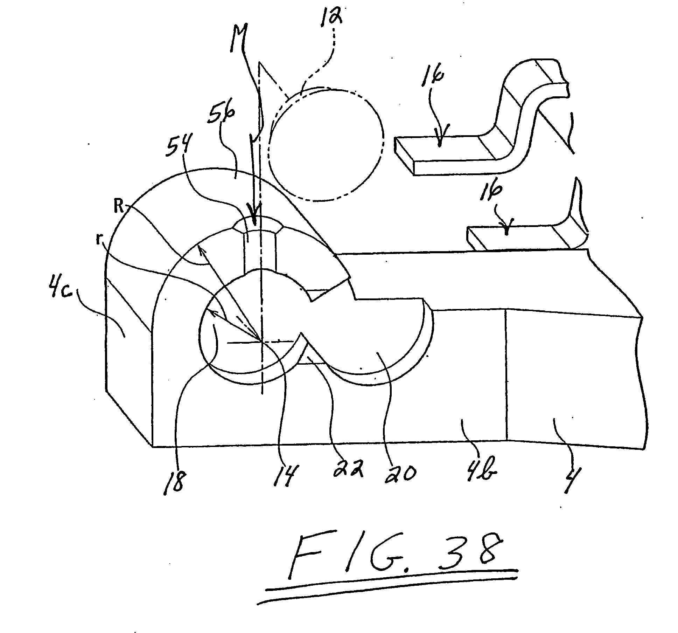

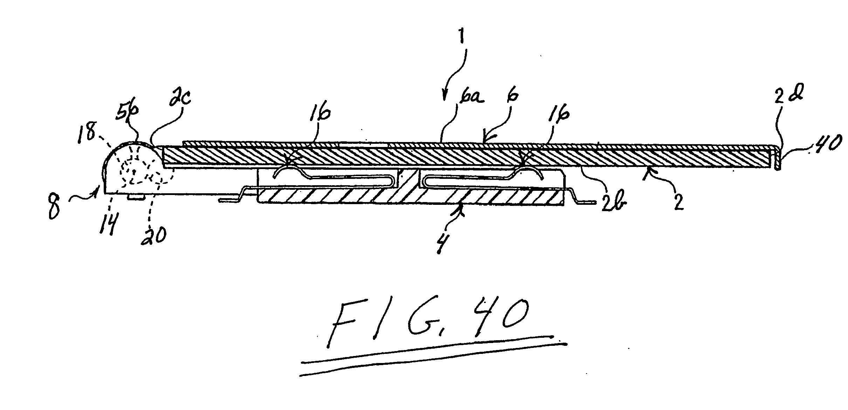

Figures 37-40 show yet a further version of the invention which includes a number of different features in the pivot-detent mechanism 8 between cover 6 and housing 4 of connector 1. Specifically, the housing includes pivot recesses 18 and detent recesses 20 located rearwardly and forwardly, respectively, of each other as shown in the very first embodiment of the invention in Figures 1-22. However, this version includes a guide groove 54 (Fig. 38) leading to each pivot recess 18 for guiding the respective pivot projection 12 into the pivot recess in the direction of arrow "M" (Fig. 38). This guide groove 54 can be of any cross-sectional configuration as long as it provides a guiding means for the projections to be inserted into pivot recesses 18.

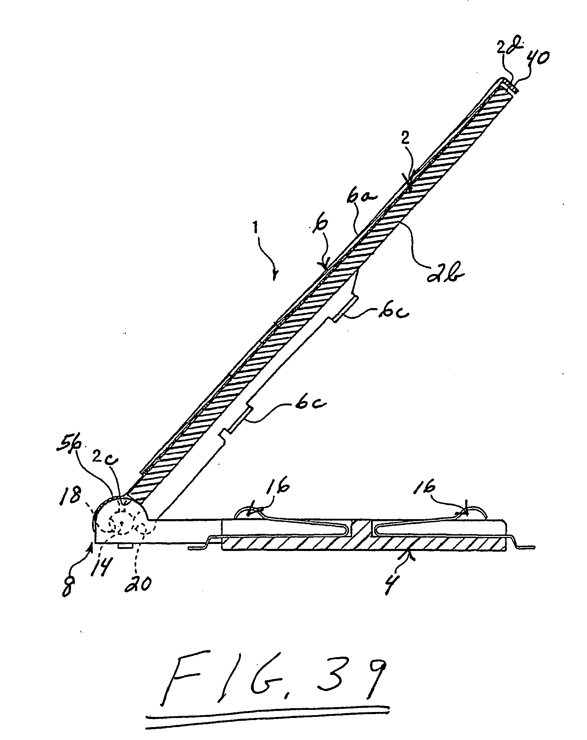

Figure 38 shows another feature wherein an outer surface 56 on the distal end 4c of each cover attaching arm 4b of housing 4 is rounded on a radius "R" as seen in Figure 38. The radius "R" of surface 56 is concentric to the radius "r" of circular pivot recess 18. In other words, these surfaces are rounded and concentric with pivot axis or line 14 as described in relation to Figures 5 and 8. Therefore, if cover 6 does not have a card support flange 42 as shown in the embodiment of Figure 30, the leading edge 2c (Fig. 39) of memory card 2 can directly engage surface 56 by gravity as the cover pivots in relation to the housing. The engagement of the leading edge of the card against surface 56 is clearly shown in Figure 39.

## Claims

1. A-memory card connector (1) for receiving a memory card (2) having a plurality of conductive contacts (2a), comprising:
an insulating housing (4);
a plurality of conductive terminals (16) mounted on the housing;
a cover (6) having receptacle means (6f) for receiving the memory card; and
a pivot-detent mechanism (8) operatively associated between the cover and the housing and movably mounting the cover to the housing, including
pivot means (12,18) comprising a pivot socket (18) in one of the cover (6) and housing (4) for receiving a pivot projection (12) on the other of the cover and the housing, engageable between the cover (6) and the housing (4) to mount the cover for pivotal movement between an open position to allow the memory card (2) to be received on the cover and a closed position bringing the contacts (2a) of the memory card into engagement with the terminals (16) on the housing, and
detent means (12,20) including a detent socket (20) separate from and independent of said pivot socket (18) for receiving said pivot projection, engageable between the cover and the housing (4) to allow the cover (6) to slidably move from said closed position to a latched position, a portion (12) of said pivot means (12,18) providing a dual function of forming a portion (12) of said detent means (12,20),
wherein said housing (4) is generally flat and mounts the terminals (16) in a generally side-by-side array and includes a pair of mounting portions (4c) at opposite sides thereof, and said cover is generally flat and the receptacle means includes a mouth (6f) at one end of the cover for insertion of the memory card (2) thereinto, the cover having a pair of spring arms (10) at an opposite end thereof and juxtaposed alongside said pair of mounting portions (4c) of the housing, said pivot-detent mechanism (8) being operatively associated between the mounting portions (4c) of the housing and the spring arms (10) of the cover,
and wherein said cover (6) is stamped and formed of sheet metal material, and said spring arms (10) are resilient to self-bias the pivot projections (12) thereon into the pivot sockets (18) and the detent sockets (20) in the mounting portions (4c) of the housing (4).

2. The memory, card connector of claim 1 wherein the detent sockets (20) define the latched position of the cover.

3. The memory card connector of claim 1 wherein said detent projections (12) are generally cone-shaped.

4. The memory card connector of claim 2 wherein the detent sockets (20) are located rearwardly of the pivot sockets (18).

5. The memory card connector of claim 1 wherein the detent sockets (20) are semi-conical.

6. The memory card connector of claim 1 wherein said cover (6) includes a cover plate (6a) spanning an area between said spring arms (10) and a pair of side walls (6b) defining opposite sides of said receptacle means (6f).

7. The memory card connector of claim 6, including latch means (6c,24a) between the side walls (6b) of the cover (6) and opposite sides of the housing (4) and automatically engageable when the cover slides to said latched position.

8. The memory card connector of claim 7 wherein said latch means comprises latching flanges (6c) formed inwardly from said side walls (6b) of the cover (6) and slidable under latching flanges (24a) at opposite sides of the housing (4) when the cover slides to said latched position.

## Patentansprüche

1. Speicherkartenverbinder (1) zum Aufnehmen einer Speicherkarte (2) mit einer Mehrzahl von leitfähigen Kontakten (2a), umfassend:
ein isolierendes Gehäuse (4);
eine Mehrzahl von leitfähigen Anschlusskontakten (16), die an dem Gehäuse montiert sind;
eine Abdeckung (6) mit einem Aufnahmemittel (6f) zur Aufnahme der Speicherkarte; und
einen Schwenk-Arretierungsmechanismus (8), der funktional verknüpft zwischen der Abdeckung und dem Gehäuse vorgesehen ist und die Abdeckung bewegbar an dem Gehäuse befestigt, wobei er umfasst:
Schwenkmittel (12, 18), die einen Schwenksockel (18) an entweder der Abdeckung (6) oder dem Gehäuse (4) umfassen, zur Aufnahme eines an dem anderen Element, der Abdeckung oder dem Gehäuse, vorgesehenen Schwenkvorsprungs (12), die zwischen der Abdeckung (6) und dem Gehäuse (4) in Eingriff gebracht werden können, um die Abdeckung zu montieren, und zwar im Hinblick auf eine Schwenkbewegung zwischen einer offenen Stellung, damit die Speicherkarte (2) an der Abdeckung aufgenommen werden kann, und einer geschlossenen Stellung, bei welcher die Kontakte (2a) der Speicherkarte in Anlage an die Anschlusskontakte (16) an dem Gehäuse gebracht werden, und
Arretierungsmittel (12, 20), die einen Arretierungssockel (20) getrennt von dem Schwenksockel (18) und unabhängig von diesem umfassen, um den Schwenkvorsprung aufzunehmen, der zwischen der Abdeckung und dem Gehäuse (4) in Eingriff gebracht werden kann, um zu ermöglichen, die Abdeckung (6) aus der geschlossenen Stellung in eine verrastete Stellung zu schieben, wobei ein Teil (12) der Schwenkmittel (12, 18) eine Doppelfunktion erfüllt, indem er einen Teil (12) der Arretierungsmittel (12, 20) bildet,
wobei das Gehäuse (4) generell flach ist und die Anschlusskontakte (16) in einer Anordnung allgemein Seite an Seite befestigt sowie ein Paar Montageabschnitte (4c) an seinen entgegengesetzten Seiten aufweist, und wobei die Abdeckung generell flach ist und das Aufnahmemittel eine Aufnahmeöffnung (6f) an einem Ende der Abdeckung zum Einfügen der Speicherkarte (2) in diese umfasst, wobei die Abdeckung ein Paar Federarme (10) an ihrem entgegengesetzten Ende und in Gegenüberlage längs des Paares von Montageabschnitten (4c) des Gehäuses umfasst,
wobei der Schwenk-Arretierungsmechanismus (8) funktional verknüpft zwischen den Montageabschnitten (4c) des Gehäuses und den Federarmen (10) der Abdeckung vorgesehen ist,
und wobei die Abdeckung (6) aus Metallblechmaterial gestanzt und geformt ist und die Federarme (10) elastisch sind, um die an diesen vorgesehenen Schwenkvorsprünge (12) selbsttätig in die Schwenksockel (18) und die Arretierungssockel (20) in den Montageabschnitten (4c) des Gehäuses (4) zu drücken.

2. Speicherkartenverbinder nach Anspruch 1,
bei welchem die Arretierungssockel (20) die verrastete Stellung der Abdeckung definieren.

3. Speicherkartenverbinder nach Anspruch 1,
bei welchem die Arretierungsvorsprünge (12) allgemein kegelförmig sind.

4. Speicherkartenverbinder nach Anspruch 2,
bei welchem die Arretierungssockel (20) hinter den Schwenksockeln (18) angeordnet sind.

5. Speicherkartenverbinder nach Anspruch 1,
bei welchem die Arretierungssockel (20) halb-kegelförmig sind.

6. Speicherkartenverbinder nach Anspruch 1,
bei welchem die Abdeckung (6) eine Abdeckplatte (6a) umfasst, die eine Fläche zwischen den Federarmen (10) überspannt, sowie ein Paar Seitenwände (6b), die entgegengesetzte Seiten des Aufnahmemittels (6f) definieren.

7. Speicherkartenverbinder nach Anspruch 6,
welcher Verrastungsmittel (6c, 24a) zwischen den Seitenwänden (6b) der Abdeckung (6) und den gegenüberliegenden Seiten des Gehäuses (4) umfasst, die automatisch in Eingriff gebracht werden können, wenn die Abdeckung in die verrastete Stellung geschoben wird.

8. Speicherkartenverbinder nach Anspruch 7,
bei welchem die Verrastungsmittel Verrastungsflansche (6c) umfasst, die von den Seitenwänden (6b) der Abdeckung (6) nach innen geformt sind und unter die Verrastungsflansche (24a) an entgegengesetzten Seiten des Gehäuses (4) geschoben werden können, wenn die Abdeckung in die verrastete Stellung geschoben wird.

## Revendications

1. Connecteur (1) de carte mémoire destiné à recevoir une carte mémoire (2) comportant une pluralité de contacts conducteurs (2a), comprenant :
un boîtier isolant (4) ;
une pluralité de bornes conductrices (16) montées sur le boîtier ;
un élément de recouvrement (6) comportant un moyen (6f) formant réceptacle destiné à recevoir la carte mémoire ; et
un mécanisme (8) de pivotement - encliquetage associé de manière fonctionnelle entre l'élément de recouvrement et le boîtier et permettant un montage mobile de l'élément de recouvrement par rapport au boîtier, incluant
un moyen (12, 18) de pivot comprenant une cavité (18) de pivot, réalisée dans l'un de l'élément de recouvrement (6) et du boîtier (4), destinée à recevoir une saillie (12) de pivot réalisée sur l'autre de l'élément de recouvrement et du boîtier, pouvant engager entre l'élément de recouvrement (6) et le boîtier (4) dans le but de monter l'élément de recouvrement pour mouvement pivotant entre une position ouverte permettant une réception de la carte mémoire (2) sur l'élément de recouvrement et une position fermée amenant les contacts (2a) de la carte mémoire en engagement avec les bornes (16) situées sur le boîtier, et
un moyen (12, 20) d'encliquetage incluant une cavité (20) d'encliquetage distincte et indépendante de ladite cavité (18) de pivot destinée à recevoir ladite saillie de pivot, pouvant engager entre l'élément de recouvrement et le boîtier (4) pour permettre un déplacement coulissant de l'élément de recouvrement (6) de ladite position fermée à une position verrouillée, une partie (12) dudit moyen (12, 18) de pivot assurant la double fonction de former une partie (12) dudit moyen (12, 20) d'encliquetage,
dans lequel ledit boîtier (4) est globalement plat et porte les bornes (16) en un groupement globalement côte à côte et inclut une paire de parties (4c) de montage au niveau de ses côtés opposés, et ledit élément de recouvrement est globalement plat et le moyen formant réceptacle inclut une embouchure (6f) située à une extrémité de l'élément de recouvrement permettant d'y introduire la carte mémoire (2), l'élément de recouvrement comportant une paire de bras (10) de ressort situés à son extrémité opposée et juxtaposés le long de ladite paire de parties (4c) de montage du boîtier, ledit mécanisme (8) de pivotement -encliquetage étant associé de manière fonctionnelle entre les parties (4c) de montage du boîtier et les bras (10) de ressort de l'élément de recouvrement,
et dans lequel ledit élément de recouvrement (6) est découpé et formé à la presse à partir d'un matériau métallique en feuille, et lesdits bras (10) de ressort sont élastiques dans le but de rappeler automatiquement les saillies (12) de pivot réalisées sur ceux-ci dans les cavités (18) de pivot et les cavités (20) d'encliquetage réalisées dans les parties (4c) de montage du boîtier (4).

2. Connecteur de carte mémoire selon la revendication 1, dans lequel les cavités (20) d'encliquetage définissent la position verrouillée de l'élément de recouvrement.

3. Connecteur de carte mémoire selon la revendication 1, dans lequel lesdites saillies (12) d'encliquetage ont globalement une forme de cône.

4. Connecteur de carte mémoire selon la revendication 2, dans lequel les cavités (20) d'encliquetage sont situées vers l'arrière des cavités (18) de pivot.

5. Connecteur de carte mémoire selon la revendication 1, dans lequel les cavités (20) d'encliquetage sont semi-coniques.

6. Connecteur de carte mémoire selon la revendication 1, dans lequel ledit élément de recouvrement (6) inclut une plaque (6a) de recouvrement couvrant une zone qui sépare lesdits bras (10) de ressort et une paire de parois latérales (6b) définissant des côtés opposés dudit moyen (6f) formant réceptacle.

7. Connecteur de carte mémoire selon la revendication 6, incluant un moyen (6c, 24a) de verrouillage entre les parois latérales (6b) de l'élément de recouvrement (6) et des côtés opposés du boîtier (4) et pouvant engager automatiquement lorsque l'élément de recouvrement coulisse vers ladite position verrouillée.

8. Connecteur de carte mémoire selon la revendication 7, dans lequel ledit moyen de verrouillage comprend des rebords (6c) de verrouillage formés vers l'intérieur desdites parois latérales (6b) de l'élément de recouvrement (6) et pouvant coulisser sous les rebords (24a) de verrouillage au niveau des côtés opposés du boîtier (4) lorsque l'élément de recouvrement coulisse vers ladite position verrouillée.
